# EUROPEAN PATENT APPLICATION

(11) **EP 4 588 748 A1**
(43) Date of publication of application: **23.07.2025**
(21) Application number: 22958694.6
(22) Date of filing: 12.09.2022
(51) Int. Cl.: B61D 37/00, B01D 53/06

(54) **CARBON DIOXIDE RECOVERY DEVICE**

(71) Applicant: MITSUBISHI ELECTRIC CORPORATION, Chiyoda-ku Tokyo 100-8310 (JP)
(72) Inventor: TANISHIMA, Makoto, Tokyo 100-8310 (JP); INOUE, Takumi, Tokyo 100-8310 (JP); FUKUI, Tomoya, Tokyo 100-8310 (JP); FUJINO, Jun, Tokyo 100-8310 (JP); ONAKA, Yoji, Tokyo 100-8310 (JP); SHINOKI, Toshio, Tokyo 100-8310 (JP); KAWAMOTO, Makoto, Tokyo 100-8310 (JP)
(74) Representative: Meissner Bolte Partnerschaft mbB
(86) International application number: PCT/JP2022/034004
(87) International publication number: WO 2024/057359

(57) **Abstract**

The carbon dioxide recovery device of the present invention includes a container disposed outside a railway vehicle and having air permeability, and an adsorbent accommodated in the container and configured to adsorb carbon dioxide, in which the container has an opening facing a direction intersecting with a traveling direction of the railway vehicle.

## Description

### Technical Field

The present invention relates to a carbon dioxide recovery device.

### Background Art

Patent Document 1 discloses a carbon dioxide recovery device that recovers carbon dioxide in air by using an adsorbent capable of adsorbing carbon dioxide. The carbon dioxide recovery device is attached to an automobile, which is a mobile object, and recovers carbon dioxide by using traveling wind generated when the automobile travels.

### Citation List

### Patent Documents

| | |
|---|---|
| Patent Document 1: | Japanese Unexamined Patent Application, First Publication JP 2021- 109 488 A |

### Summary of Invention

### Problem to be Solved by the Invention

In Patent Document 1, the carbon dioxide recovery device introduces wind from a traveling direction of a mobile object therein to adsorb carbon dioxide. However, depending on a shape of the mobile object, the carbon dioxide recovery device may have difficulty receiving the wind from the traveling direction of the mobile object, and an adsorption efficiency of carbon dioxide may be decreased.

In view of the above circumstances, an object of the present invention is to provide a carbon dioxide recovery device capable of preventing a decrease in an adsorption efficiency of carbon dioxide.

### Means to Solve the Problem

One aspect of the carbon dioxide recovery device according to the present invention includes a container disposed outside a railway vehicle and having air permeability, and an adsorbent accommodated in the container and configured to adsorb carbon dioxide, in which the container has an opening facing a direction intersecting a traveling direction of the railway vehicle.

### Effects of the Invention

According to the present invention, it is possible to provide a carbon dioxide recovery device capable of preventing a decrease in the adsorption efficiency of carbon dioxide.

### Brief Description of the Drawings

- FIG. 1: A schematic view of a carbon dioxide recovery device and a railway vehicle according to Embodiment 1 as viewed from a side.
- FIG. 2: A cross-sectional view taken along line A-A of FIG. 1.
- FIG. 3: A block diagram of a carbon dioxide recovery device according to Embodiment 2.
- FIG. 4: A schematic view of the carbon dioxide recovery device and the railway vehicle according to Embodiment 2 as viewed from a traveling direction.
- FIG. 5: A block diagram of a carbon dioxide recovery device according to Embodiment 3.
- FIG. 6: A schematic view of the carbon dioxide recovery device and the railway vehicle according to Embodiment 3 as viewed from a traveling direction.
- FIG. 7: A schematic view of a carbon dioxide recovery device and the railway vehicle according to a modification example of Embodiment 3 as viewed from a traveling direction.
- FIG. 8: A schematic view of a carbon dioxide recovery device and the railway vehicle according to Embodiment 4 as viewed from a side.
- FIG. 9: A cross-sectional view taken along line B-B of FIG. 8.
- FIG. 10: A schematic view of a carbon dioxide recovery device and the railway vehicle according to Embodiment 5 as viewed from a side.
- FIG. 11: A cross-sectional view taken along the line C-C of FIG. 10.
- FIG. 12: A schematic view showing a state of a carbon dioxide recovery device according to Embodiment 6 during traveling of the railway vehicle.
- FIG. 13: A schematic view showing a state of the carbon dioxide recovery device according to Embodiment 6 when the railway vehicle is stopped.
- FIG. 14: A schematic view of a carbon dioxide recovery device and a railway vehicle according to a modification example of Embodiment 1 as viewed from a side.

### Description of Embodiments

Hereinafter, embodiments of the present invention will be described with reference to the drawings. The scope of the present invention is not limited to the following embodiments, and can be changed in any way within the scope of the technical ideas of the present invention.

### Embodiment 1

A carbon dioxide recovery system includes a carbon dioxide recovery device 1 and a railway vehicle 2. The carbon dioxide recovery device 1 recovers carbon dioxide by using traveling wind generated when the railway vehicle 2 travels.

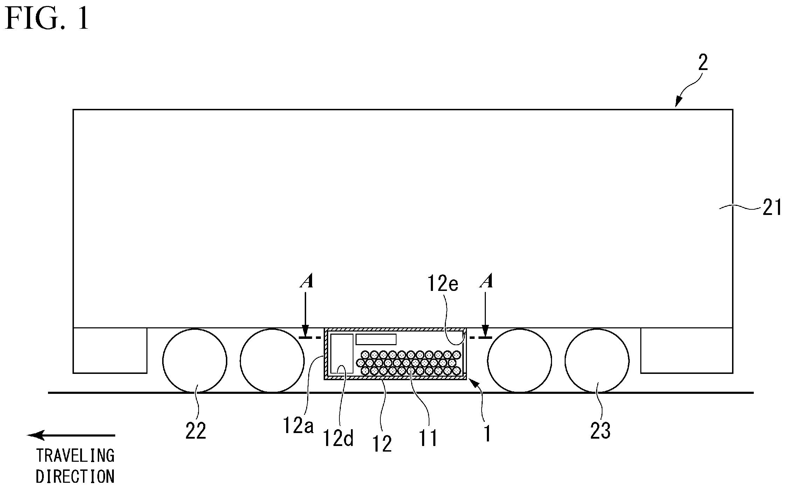

As shown in FIG. 1, the railway vehicle 2 includes a vehicle main body 21, a front bogie 22, and a rear bogie 23. The front bogie 22 and the rear bogie 23 are attached to a lower part of the vehicle main body 21 and support the vehicle main body 21. The railway vehicle 2 travels as the front bogie 22 and the rear bogie 23 move on a traveling rail (not shown).

Hereinafter, the direction in which the railway vehicle 2 travels is referred to as a traveling direction of the railway vehicle 2. A front side of the railway vehicle 2 in the traveling direction is simply referred to as a front side, and a rear side of the railway vehicle 2 in the traveling direction is simply referred to as a rear side.

The carbon dioxide recovery device 1 includes an adsorbent 11 and an adsorption container 12 (container).

The adsorbent 11 includes a material capable of adsorbing carbon dioxide. Examples of a material capable of adsorbing carbon dioxide include amine, zeolite, silica gel, diatomaceous earth, alumina, activated carbon, and the like. A plurality of materials may be selected from the above, or a material other than the above may be selected. The adsorbent 11 may have a granular shape (for example, bead shape (spherical) or pellet shape (cylindrical)). Alternatively, a powdery adsorbent 11 may be adopted. In this case, the powdery adsorbent 11 may be carried on a surface of a base material. The base material may have, for example, a honeycomb shape.

The adsorption container 12 is a box-shaped container capable of accommodating the adsorbent 11. As shown in FIG. 1, the adsorption container 12 is disposed outside the railway vehicle 2. The adsorption container 12 is attached to a lower surface of the vehicle main body 21. The adsorption container 12 is positioned between the front bogie 22 and the rear bogie 23. The adsorption container 12 may be attached to an upper surface of the vehicle main body 21 (that is, a roof of the vehicle main body 21).

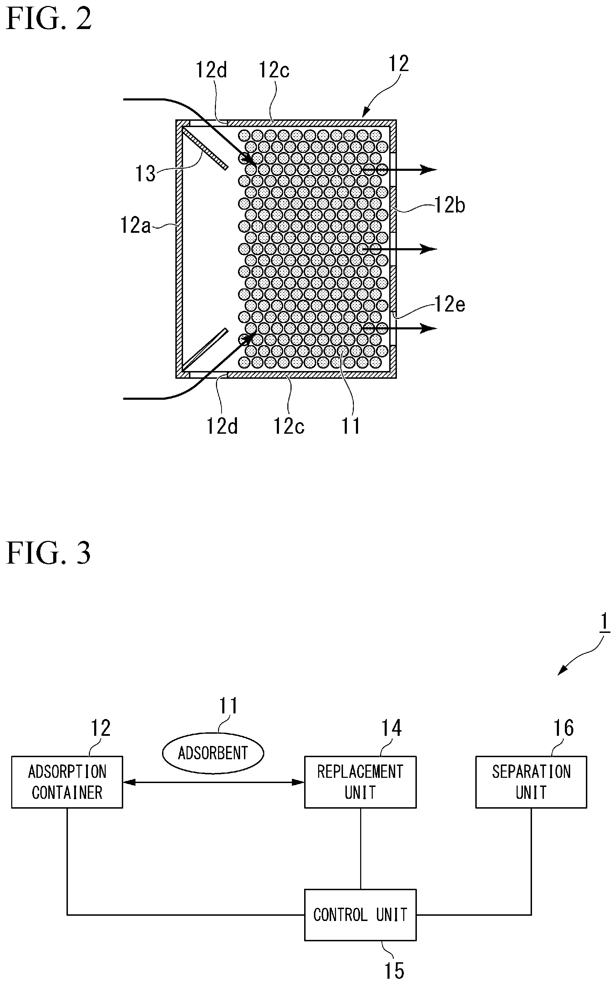

As shown in FIG. 2, in a top view, the adsorption container 12 includes a front surface 12a, a rear surface 12b positioned behind the front surface 12a in the traveling direction of the railway vehicle 2, and a pair of side surfaces 12c connecting the front surface 12a and the rear surface 12b. The side surface 12c is disposed parallel to the traveling direction of the railway vehicle 2.

A first opening portion 12d (opening) is formed on the side surface 12c. The first opening portion 12d faces a direction intersecting the traveling direction of the railway vehicle 2. In the present embodiment, the first opening portion 12d faces a direction orthogonal to the traveling direction of the railway vehicle 2. The first opening portion 12d takes in the traveling wind of the railway vehicle 2 into the inside of the adsorption container 12. The first opening portion 12d may be formed by a single opening. The first opening portion 12d may be formed by a plurality of openings. The first opening portion 12d may have a mesh shape. The size of the opening of the first opening portion 12d may be any size that does not allow the adsorbent 11 to fall out from the first opening portion 12d.

A second opening portion 12e is formed on the rear surface 12b. The second opening portion 12e faces rearward in the traveling direction of the railway vehicle 2. The second opening portion 12e discharges air that has flowed inside the adsorption container 12 to outside of the adsorption container 12. The second opening portion 12e may be formed by a single opening. The second opening portion 12e may be formed by a plurality of openings. The second opening portion 12e may have a mesh shape. The second opening portion 12e may only be capable of discharging the air that has flowed inside the adsorption container 12 to the outside of the adsorption container 12, and may be formed at a rear part of the side surface 12c.

An inside of the adsorption container 12 is provided with a guide plate 13. The guide plate 13 uses the Coanda effect to guide the air taken in from the first opening portion 12d to the adsorbent 11. In a top view, the guide plate 13 is inclined with respect to the traveling direction of the railway vehicle 2. One end part of the guide plate 13 is attached to an inner surface of the adsorption container 12 on a front side of the first opening portion 12d. The guide plate 13 extends in a direction rearward in the traveling direction of the railway vehicle 2 and away from the side surface 12c (that is, from the first opening portion 12d), as the guide plate 13 goes from the one end part toward the other end part. The guide plate 13 may be linear or curved.

The adsorption container 12 has the first opening portion 12d and the second opening portion 12e, and thus has air permeability. As shown by the arrow in FIG. 2, when the railway vehicle 2 travels, the air outside the adsorption container 12 enters the inside of the adsorption container 12 via the first opening portion 12d. In addition, the air inside the adsorption container 12 is discharged to the outside of the adsorption container 12 via the second opening portion 12e. That is, the air inside the adsorption container 12 and the air outside the adsorption container 12 can be exchanged with each other by the traveling of the railway vehicle 2.

Since the adsorption container 12 is disposed between the front bogie 22 and the rear bogie 23, there is a possibility that the wind from the traveling direction of the railway vehicle 2 may be blocked by the front bogie 22. However, by providing the first opening portion 12d on the side surface 12c, the traveling wind of the railway vehicle 2 can be taken into the inside of the adsorption container 12 from the first opening portion 12d.

The air that has entered the inside of the adsorption container 12 from the first opening portion 12d is guided to the adsorbent 11 by the guide plate 13. By bringing the air into contact with the adsorbent 11, carbon dioxide is adsorbed onto the adsorbent 11. That is, in the present embodiment, the traveling wind generated when the railway vehicle 2 travels is directed to the adsorbent 11 to bring the air containing carbon dioxide into contact with the adsorbent 11, so that the carbon dioxide is adsorbed onto the adsorbent 11.

As described above, the carbon dioxide recovery device 1 according to the present embodiment includes the adsorption container 12 disposed outside the railway vehicle 2 and having air permeability, and the adsorbent 11 that is accommodated in the adsorption container 12 and adsorbs carbon dioxide. The adsorption container 12 has the first opening portion 12d facing a direction intersecting the traveling direction of the railway vehicle 2.

With such a carbon dioxide recovery device 1, carbon dioxide can be recovered using the traveling wind of the railway vehicle 2. As a result, carbon dioxide can be recovered with energy savings compared to, for example, using a dedicated blower or the like for generating air flow. In addition, the adsorption container 12 has the first opening portion 12d facing a direction intersecting the traveling direction of the railway vehicle 2.

As a result, even in a case where the adsorption container 12 is less likely to receive wind from the traveling direction of the railway vehicle 2, the traveling wind of the railway vehicle 2 can be taken into the inside of the adsorption container 12 from the first opening portion 12d, and the decrease in the adsorption efficiency of carbon dioxide can be suppressed.

In addition, the guide plate 13 that guides air from the first opening portion 12d to the adsorbent 11 is provided inside the adsorption container 12.

Since the air taken in from the first opening portion 12d is guided to the adsorbent 11 by the guide plate 13, the air can be brought into contact with the adsorbent 11 more efficiently, and the adsorption efficiency of carbon dioxide is improved.

### Embodiment 2

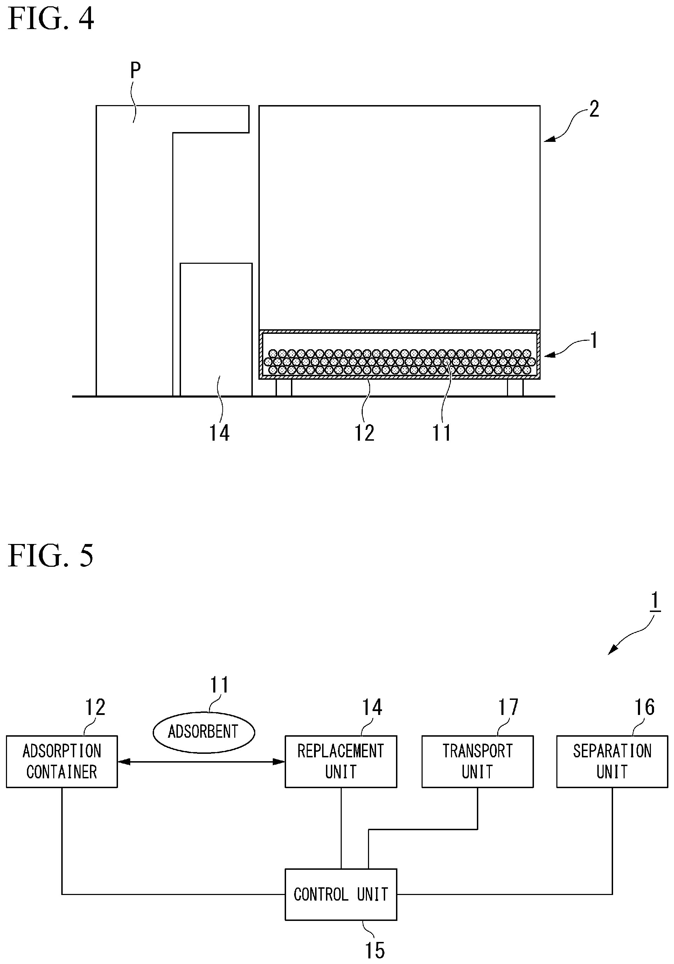

Next, a carbon dioxide recovery system according to Embodiment 2 will be described with reference to FIGS. 3 and 4. Since a basic configuration of the carbon dioxide recovery system according to the present embodiment is the same as that of Embodiment 1, descriptions will focus on differences.

As shown in FIG. 3, in the present embodiment, the carbon dioxide recovery device 1 further includes a replacement unit 14, a control unit 15, and a separation unit 16. The adsorption container 12, the replacement unit 14, and the separation unit 16 are controlled by the control unit 15.

As shown in FIG. 4, the replacement unit 14 is disposed below a platform P of a railway station. The replacement unit 14 replaces the adsorbent 11 accommodated in the adsorption container 12. The replacement unit 14 may take out the adsorbent 11 which has adsorbed the carbon dioxide from the adsorption container 12 and install a new adsorbent 11 in the adsorption container 12. Alternatively, the replacement unit 14 may replace the entire adsorption container 12. The replaced adsorbent 11 is transported to the separation unit 16.

In order to secure the replacement time for the adsorbent 11, it is preferable that the replacement unit 14 be installed on the platform P of the terminal station or the transfer station.

The control unit 15 is connected to the replacement unit 14. The control unit 15 causes the replacement unit 14 to replace the adsorbent 11 when the railway vehicle 2 stops at the railway station where the replacement unit 14 is installed. The control unit 15 may acquire a stopping time (scheduled stopping time) of the railway vehicle 2 at the railway station where the replacement unit 14 is installed, and may cause the replacement unit 14 to replace the adsorbent 11 in a case where the stopping time of the railway vehicle 2 exceeds a threshold value.

The threshold value can be appropriately set, but may be, for example, 5 minutes. The control unit 15 may cause the replacement unit 14 to replace the adsorbent 11 as soon as the railway vehicle 2 arrives at the railway station where the stopping time exceeds the threshold value.

The separation unit 16 has a function of separating the carbon dioxide from the adsorbent 11. The separation unit 16 may include a heater, and may separate carbon dioxide by heating (for example, 60 °C to 130 °C) the adsorbent 11. The heating temperature may be appropriately changed depending on the specific material of the adsorbent 11. Alternatively, the separation unit 16 may include a vacuum pump and separate carbon dioxide by placing the adsorbent 11 under a reduced pressure condition. The separation unit 16 may be disposed below the platform P or at another place. The adsorbent 11 from which the carbon dioxide has been separated by the separation unit 16 may be installed in the adsorption container 12 as a new adsorbent 11.

As described above, the carbon dioxide recovery device 1 according to the present embodiment further includes the replacement unit 14 that replaces the adsorbent 11 accommodated in the adsorption container 12, and the control unit 15 that causes the replacement unit 14 to replace the adsorbent 11 when the railway vehicle 2 is stopped.

Accordingly, the adsorbent 11 which has adsorbed the carbon dioxide can be replaced during the stopping time of the railway vehicle 2, thereby improving the recovery efficiency of carbon dioxide.

In addition, the control unit 15 causes the replacement unit 14 to replace the adsorbent 11 in a case where the stopping time of the railway vehicle 2 exceeds the threshold value.

As a result, the adsorbent 11 can be reliably replaced.

### Embodiment 3

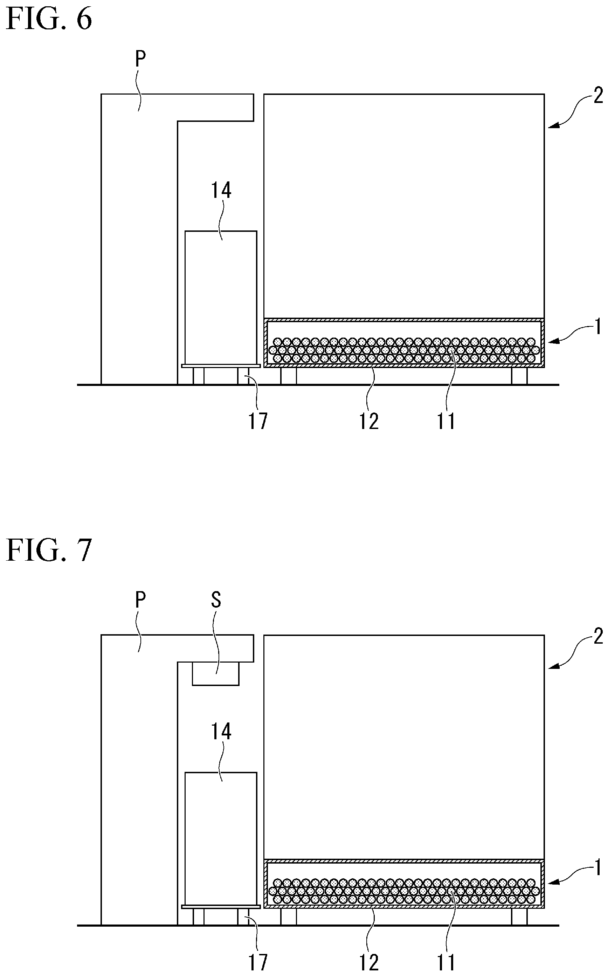

Next, a carbon dioxide recovery system according to Embodiment 3 will be described with reference to FIGS. 5 and 6. Since a basic configuration of the carbon dioxide recovery system according to the present embodiment is the same as that of Embodiment 2, descriptions will focus on differences.

As shown in FIG. 5 and FIG. 6, in the present embodiment, the carbon dioxide recovery device 1 further includes a transport unit 17 that transports the adsorbent 11. The transport unit 17 is controlled by the control unit 15. The transport unit 17 transports the adsorbent 11 taken out from the adsorption container 12 to the separation unit 16 and transports a new adsorbent 11 to the adsorption container 12. The transport unit 17 may transport the adsorbent 11, from which the carbon dioxide is separated by the separation unit 16, to the adsorption container 12 as a new adsorbent 11.

The transport unit 17 includes a placement portion on which the replacement unit 14 is placed, and a transport rail for moving the placement portion. The transport rail may be disposed in parallel with the traveling rail of the railway vehicle 2. The transport unit 17 transports the replacement unit 14 using the transport rail to transport the adsorbent 11 accommodated in the replacement unit 14.

For example, on the platform P, the replacement unit 14 takes out the adsorbent 11, which has adsorbed the carbon dioxide, from the adsorption container 12 and accommodates the adsorbent 11 therein. The transport unit 17 transports the replacement unit 14, in which the adsorbent 11 taken out from the adsorption container 12 is accommodated, from the platform P to the separation unit 16.

In addition, the transport unit 17 transports the replacement unit 14, which accommodates the adsorbent 11 from which the carbon dioxide has been separated by the separation unit 16, from the separation unit 16 to the platform P. On the platform P, the replacement unit 14 installs the adsorbent 11, from which the carbon dioxide has been separated by the separation unit 16, into the adsorption container 12.

The transport unit 17 may transport the adsorbent 11 replaced by the replacement unit 14 to the separation unit 16 and may transport a new adsorbent 11 to the replacement unit 14. In this case, the transport unit 17 may include a transport container in which the adsorbent 11 replaced by the replacement unit 14 is accommodated, and a transport rail for moving the transport container.

In a case where the replacement unit 14 replaces the entire adsorption container 12, the transport unit 17 may not have the transport container, and may transport the entire adsorption container 12 by the transport rail. The transport unit 17 may be configured with a wheel and a groove on which the wheel travels.

As described above, the carbon dioxide recovery device 1 according to the present embodiment further includes the transport unit 17 that transports the adsorbent 11 replaced by the replacement unit 14.

As a result, the transport of the adsorbent 11 becomes easier, and the recovery efficiency of the carbon dioxide in the entire device is improved.

### Modification Example of Embodiment 3

In a case where the stop position of the railway vehicle 2 that stops at the railway station where the replacement unit 14 is installed deviates from the scheduled stop position, it may be difficult to replace the adsorbent 11 using the replacement unit 14.

In the present modification example, as shown in FIG. 7, the carbon dioxide recovery device 1 further includes a sensor S that detects the stop position of the railway vehicle 2 when the railway vehicle 2 is stopped. The sensor S is installed, for example, on the platform P. The sensor S detects a deviation amount (hereinafter, also referred to as a deviation amount of the stop position of the railway vehicle 2) of the stop position of the railway vehicle 2 with respect to the scheduled stop position, as the stop position of the railway vehicle 2.

A detection result of the sensor S is input to the control unit 15. The control unit 15 causes the transport unit 17 to transport the replacement unit 14 according to the deviation amount of the stop position of the railway vehicle 2 and to move the replacement unit 14 to a position suitable for replacing the adsorbent 11. It should be noted that the sensor S may detect the stop position of the railway vehicle 2 itself, and the control unit 15 may calculate the deviation amount of the stop position of the railway vehicle 2 based on the detection result of the sensor S.

As described above, the carbon dioxide recovery device 1 according to the present modification example further includes the sensor S that detects the stop position of the railway vehicle 2 when the railway vehicle 2 is stopped. The control unit 15 causes the transport unit 17 to transport the replacement unit 14 based on the detection result of the sensor S.

As a result, even in a case where the stop position of the railway vehicle 2 deviates from the scheduled stop position, the replacement unit 14 can reliably replace the adsorbent 11, thereby improving the recovery efficiency of the carbon dioxide in the entire device.

### Embodiment 4

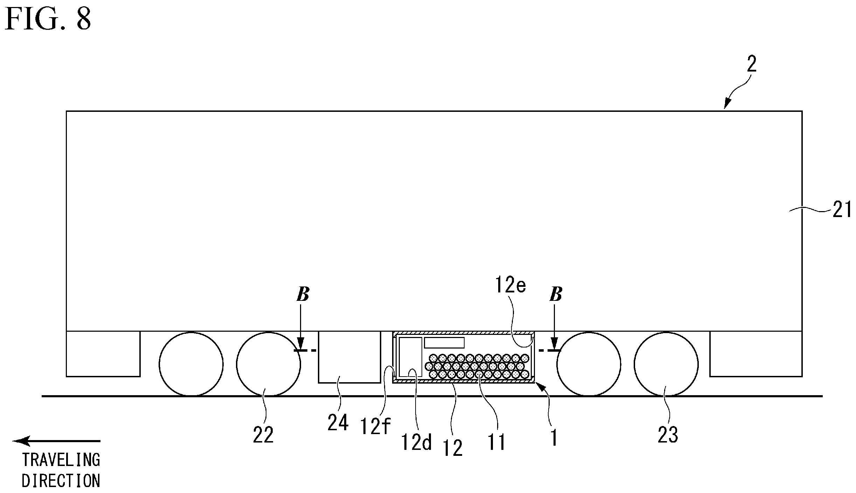

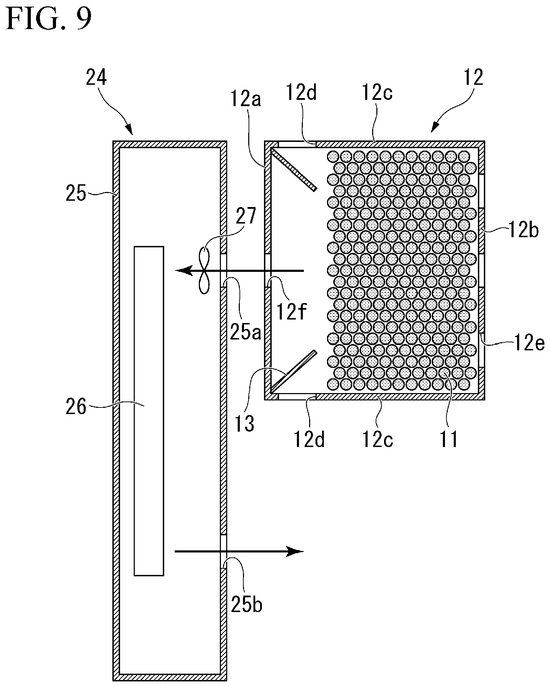

Next, a carbon dioxide recovery system according to Embodiment 4 will be described with reference to FIGS. 8 and 9. Since a basic configuration of the carbon dioxide recovery system according to the present embodiment is the same as that of Embodiment 2, descriptions will focus on differences.

As shown in FIG. 8, in the present embodiment, the railway vehicle 2 includes a heat-generating device 24 installed on the lower surface of the vehicle main body 21. The heat-generating device 24 is disposed between the front bogie 22 and the adsorption container 12. The heat-generating device 24 is, for example, a control device such as a transformer or an inverter.

As shown in FIG. 9, the heat-generating device 24 includes a casing 25, a heat-generating component 26 accommodated in the casing 25, and a cooling blower 27 for cooling the heat-generating component 26.

A suction port 25a and an exhaust port 25b are formed in the casing 25. The air is sucked into the casing 25 from the suction port 25a by the driving of the cooling blower 27. In the casing 25, the air sucked in from the suction port 25a and the heat-generating component 26 exchange heat with each other. As a result, the heat-generating component 26 is cooled, and the air sucked in from the suction port 25a is heated. The heated air is discharged from the exhaust port 25b to the outside of the casing 25.

In the present embodiment, a third opening portion 12f is formed on the front surface 12a of the adsorption container 12. The adsorption container 12 is disposed such that the third opening portion 12f and the suction port 25a face each other. The third opening portion 12f is positioned on an upstream side of the suction port 25a in a flow direction of the air flow generated by the cooling blower 27. That is, the adsorption container 12 is provided upstream of the cooling blower 27. The upstream of the cooling blower 27 is a space where the air to be sucked by the cooling blower 27 is present when the cooling blower 27 blows air.

The air flow of the air sucked from the suction port 25a into the casing 25 by the driving of the cooling blower 27 reaches the adsorption container 12. In the present embodiment, in addition to the traveling wind generated when the railway vehicle 2 travels, the air flow generated by the cooling blower 27 is directed to the adsorbent 11 to bring the air containing carbon dioxide into contact with the adsorbent 11, thereby adsorbing the carbon dioxide onto the adsorbent 11.

As described above, in the present embodiment, the adsorption container 12 is disposed at a position where the air flow of the cooling blower 27 for cooling the heat-generating component 26 of the railway vehicle 2 is received.

When the cooling blower 27 is driven, the air flow generated by the cooling blower 27 reaches the adsorption container 12. The carbon dioxide can be recovered by using the air flow generated by the cooling blower 27 in addition to the traveling wind generated when the railway vehicle 2 travels. Therefore, the recovery efficiency of carbon dioxide is further improved.

### Embodiment 5

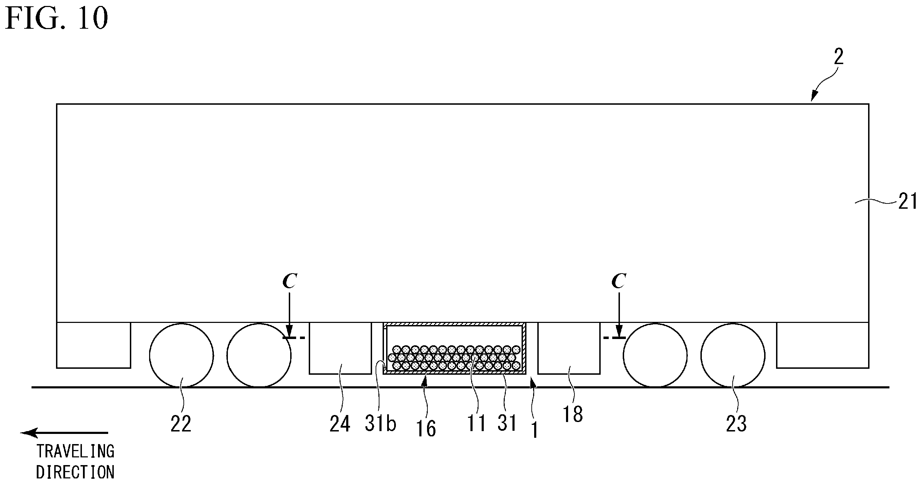

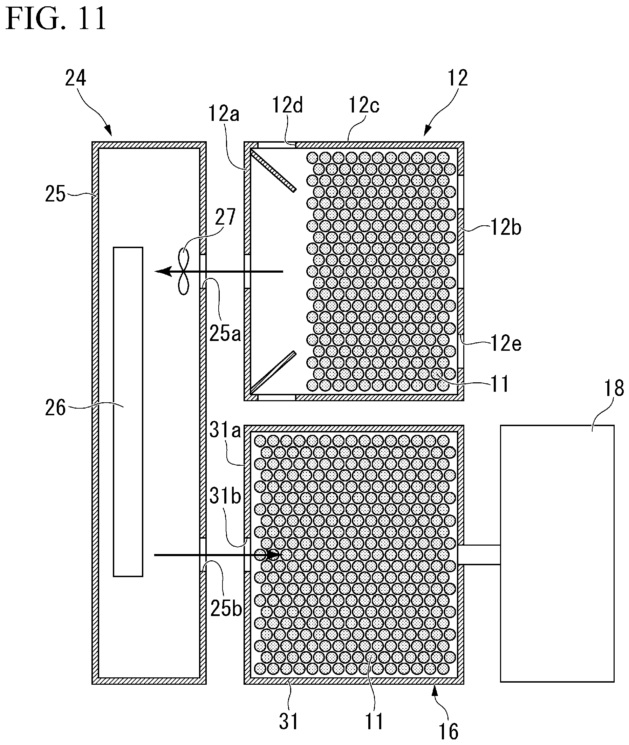

Next, a carbon dioxide recovery system according to Embodiment 5 will be described with reference to FIGS. 10 and 11. Since a basic configuration of the carbon dioxide recovery system according to the present embodiment is the same as that of Embodiment 4, descriptions will focus on differences.

In the present embodiment, the carbon dioxide recovery device 1 further includes a recovery unit 18. In addition, the separation unit 16 is installed on the lower surface of the vehicle main body 21. The separation unit 16 is disposed between the heat-generating device 24 and the recovery unit 18.

In the present embodiment, the separation unit 16 includes a separation container 31 capable of accommodating the adsorbent 11 which has adsorbed the carbon dioxide. A separation opening portion 31b is formed on a front surface 31a of the separation container 31. The separation container 31 is disposed such that the separation opening portion 31b and the exhaust port 25b face each other. The separation opening portion 31b is positioned on a downstream side of the exhaust port 25b in the flow direction of the air flow generated by the cooling blower 27.

That is, the separation container 31 is provided downstream of the cooling blower 27. The downstream of the cooling blower 27 is a space where air from the cooling blower 27 is blown when the cooling blower 27 blows air. The air flow of the air discharged from the exhaust port 25b to the outside of the casing 25 by the driving of the cooling blower 27 reaches the separation container 31. The air discharged from the exhaust port 25b to the outside of the casing 25 is heated through heat exchange with the heat-generating component 26.

In the present embodiment, the separation unit 16 separates the carbon dioxide from the adsorbent 11 by heating the adsorbent 11 accommodated in the separation container 31 with the heat of the air discharged from the exhaust port 25b to the outside of the casing 25. That is, the separation unit 16 utilizes the heat of the air discharged from the exhaust port 25b to the outside of the casing 25 as at least a part of a heat source for separating the carbon dioxide. The separation unit 16 may further include a heater that heats the adsorbent 11 accommodated in the separation container 31.

The recovery unit 18 is installed on the lower surface of the vehicle main body 21. The recovery unit 18 is connected to the separation unit 16. The recovery unit 18 recovers the carbon dioxide separated by the separation unit 16. The recovery unit 18 is, for example, a gas cylinder capable of storing the carbon dioxide. In this case, the gas cylinder in which the carbon dioxide is stored may be transported to another place (for example, a factory or the like), and the carbon dioxide may be used. In addition, a compressor that liquefies carbon dioxide may be provided between the separation unit 16 and the recovery unit 18, and the liquefied carbon dioxide may be recovered in the recovery unit 18.

As described above, the carbon dioxide recovery device 1 according to the present embodiment further includes the separation unit 16 that separates the carbon dioxide from the adsorbent 11 which has adsorbed the carbon dioxide. The separation unit 16 is disposed at a position where the air flow from the cooling blower 27 for cooling the heat-generating component 26 of the railway vehicle 2 is received.

The separation unit 16 separates the carbon dioxide from the adsorbent 11 which has adsorbed the carbon dioxide by utilizing the heat of the air flow generated by the cooling blower 27. Therefore, carbon dioxide can be separated with energy savings and cost savings, and the recovery efficiency of carbon dioxide is improved.

### Embodiment 6

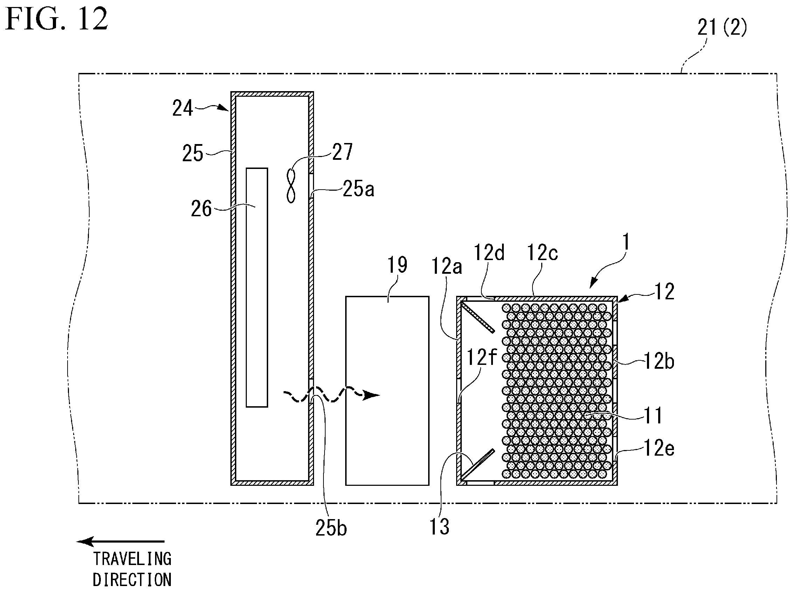

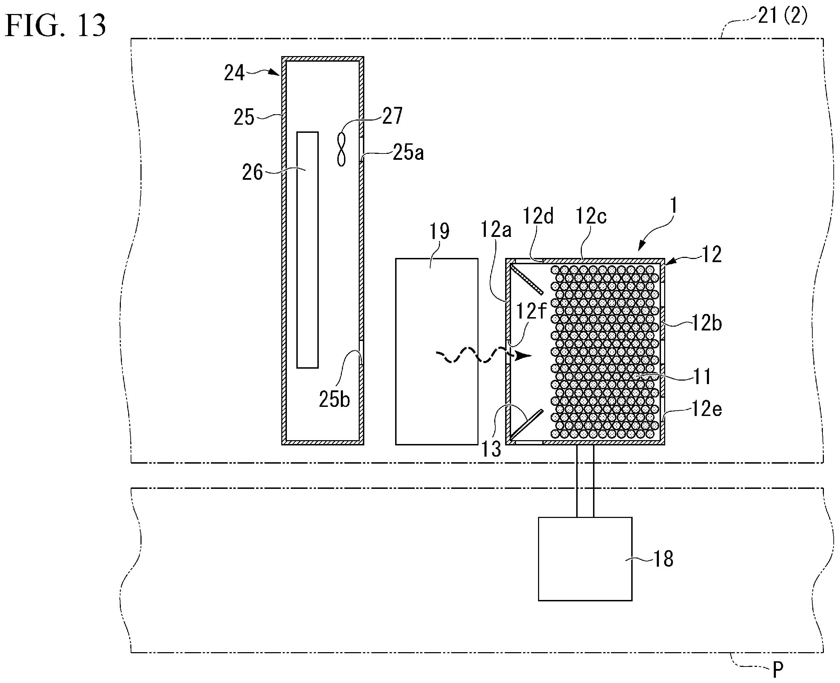

Next, a carbon dioxide recovery system according to Embodiment 6 will be described with reference to FIGS. 12 and 13. Since a basic configuration of the carbon dioxide recovery system according to the present embodiment is the same as that of Embodiment 2, descriptions will focus on differences.

In the present embodiment, the carbon dioxide recovery device 1 includes the adsorbent 11, the adsorption container 12, the control unit 15, the recovery unit 18, and a heat storage unit 19. That is, in the present embodiment, the carbon dioxide recovery device 1 does not include the replacement unit 14 and the separation unit 16. The carbon dioxide recovery device 1 includes the recovery unit 18 and the heat storage unit 19.

The recovery unit 18 and the heat storage unit 19 are controlled by the control unit 15. The carbon dioxide recovery device 1 adsorbs carbon dioxide onto the adsorbent 11 accommodated in the adsorption container 12 during the traveling of the railway vehicle 2, and separates the carbon dioxide from the adsorbent 11 accommodated in the adsorption container 12 when the railway vehicle 2 is stopped.

The heat storage unit 19 is installed on the lower surface of the vehicle main body 21. The heat storage unit 19 is disposed between the heat-generating device 24 and the adsorption container 12. The heat storage unit 19, under the control of the control unit 15, can store heat therein from the outside and release the stored heat therein to the outside.

The heat storage unit 19 is disposed to face the exhaust port 25b. The heat storage unit 19 is positioned on a downstream side of the exhaust port 25b in the flow direction of the air flow generated by the cooling blower 27. The air flow of the air discharged from the exhaust port 25b to the outside of the casing 25 by the driving of the cooling blower 27 reaches the heat storage unit 19. The air discharged from the exhaust port 25b to the outside of the casing 25 is heated through heat exchange with the heat-generating component 26.

As shown by a broken-line arrow in FIG. 12, the heat storage unit 19 stores the heat of the air discharged from the exhaust port 25b to the outside of the casing 25 therein (that is, the heat generated by the heat-generating component 26) during the traveling of the railway vehicle 2.

The third opening portion 12f is formed on the front surface 12a of the adsorption container 12. The heat storage unit 19 is disposed to face the third opening portion 12f. As shown by a broken-line arrow in FIG. 13, the heat storage unit 19 releases the heat stored therein toward the adsorption container 12 when the railway vehicle 2 stops at the railway station where the recovery unit 18 is installed.

This heat is transferred to the adsorbent 11 accommodated in the adsorption container 12 via the third opening portion 12f. The adsorbent 11 is heated with the heat transferred from the heat storage unit 19, thereby separating the carbon dioxide from the adsorbent 11 in the adsorption container 12. That is, the heat stored in the heat storage unit 19 is utilized as a heat source for separating the carbon dioxide.

As shown in FIG. 13, the recovery unit 18 is disposed below the platform P of the stopping station where the railway vehicle 2 stops. The recovery unit 18 is, for example, a gas cylinder capable of storing the carbon dioxide. The recovery unit 18 is connected to the adsorption container 12 and recovers the carbon dioxide separated in the adsorption container 12 when the railway vehicle 2 stops at the railway station where the recovery unit 18 is installed.

As shown in FIG. 12, the control unit 15 causes the heat storage unit 19 to store the heat of the air discharged from the exhaust port 25b to the outside of the casing 25 (that is, the heat generated by the heat-generating component 26) during the traveling of the railway vehicle 2.

As shown in FIG. 13, the control unit 15 causes the heat storage unit 19 to release the heat stored therein toward the adsorption container 12 and to connect the recovery unit 18 to the adsorption container 12, when the railway vehicle 2 stops at the railway station where the recovery unit 18 is installed.

The control unit 15 may acquire the stopping time (scheduled stopping time) of the railway vehicle 2 at the railway station where the recovery unit 18 is installed, and may control the heat storage unit 19 and the recovery unit 18 as described above in a case where the stopping time of the railway vehicle 2 exceeds a threshold value. The threshold value can be appropriately set, but may be, for example, 5 minutes.

As described above, the carbon dioxide recovery device 1 according to the present embodiment further includes the heat storage unit 19 that stores the heat generated by the heat-generating component 26 of the railway vehicle 2, and the control unit 15 that causes the heat storage unit 19 to release the stored heat toward the adsorption container 12 when the railway vehicle 2 is stopped.

When the railway vehicle 2 is stopped, the heat stored in the heat storage unit 19 is released toward the adsorption container 12, and the carbon dioxide is separated from the adsorbent 11 accommodated in the adsorption container 12 by using the heat. In the adsorption container 12, carbon dioxide can be adsorbed and separated, thereby improving the recovery efficiency of carbon dioxide.

The carbon dioxide recovery device 1 further includes the recovery unit 18 that recovers carbon dioxide, and the control unit 15 connects the recovery unit 18 to the adsorption container 12 when the railway vehicle 2 is stopped.

As a result, the carbon dioxide separated from the adsorbent 11 in the adsorption container 12 can be recovered by the recovery unit 18, thereby further improving the recovery efficiency of the carbon dioxide.

However, the technical scope of the present invention is not limited to the above embodiments, and various modifications can be made without departing from the gist of the present invention.

For example, the carbon dioxide recovery device 1 may be provided in a mobile object (for example, an automobile including a bus and a truck) other than the railway vehicle 2. In this case, the adsorption container 12 is disposed outside the mobile object. The carbon dioxide recovery device 1 recovers carbon dioxide by utilizing the traveling wind generated when the mobile object travels.

Even in a case where the adsorption container 12 is less likely to receive the wind from the traveling direction of the mobile object, the traveling wind of the mobile object can be taken into the inside of the adsorption container 12 from the first opening portion 12d, so that the decrease in the adsorption efficiency of carbon dioxide can be suppressed.

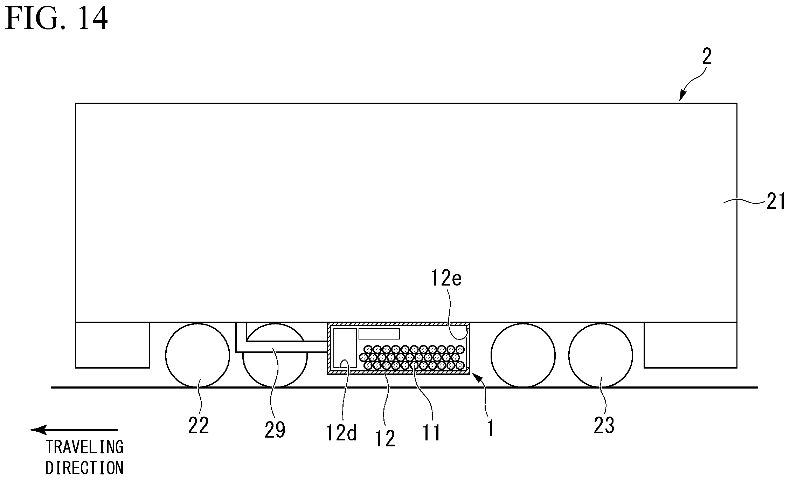

As shown in FIG. 14, in the above-described embodiments, the railway vehicle 2 may be provided with an exhaust duct 29 that discharges the air inside the vehicle main body 21 to the outside, and the adsorption container 12 may be disposed on the downstream side of the exhaust duct 29. In this case, the air flow of the air discharged from the exhaust duct 29 reaches the adsorption container 12.

The carbon dioxide concentration of the air inside the vehicle main body 21 often increases due to human respiration. By disposing the adsorption container 12 on the downstream side of the exhaust duct 29, it is possible to recover carbon dioxide from the air having a high carbon dioxide concentration, which is discharged from the inside of the vehicle main body 21, and thus the recovery efficiency of carbon dioxide is further improved.

In addition, the above-described embodiments or modification examples may be appropriately combined.

For example, in the carbon dioxide recovery device 1 that separates carbon dioxide in the adsorption container 12 as in Embodiment 6, the recovery unit 18 may be installed on the lower surface of the vehicle main body 21 as described in Embodiment 5.

It should be noted that the aforementioned control unit 15 includes a computer system therein. A program for implementing functions of each configuration provided by the carbon dioxide recovery system described above may be recorded on a computer-readable recording medium, and by having the computer system read and execute the program recorded on this recording medium, processing in the control unit 15 described above may be performed. In addition, hardware other than the control unit 15 may perform the above-described processing.

Here, "having the computer system read and execute the program recorded on the recording medium" includes installing the program on the computer system. Here, the "computer system" mentioned here includes an operating system (OS) and hardware such as a peripheral device.

In addition, the "computer system" may include a plurality of computer devices connected via a network including a communication line such as the Internet, a WAN, a LAN, and a dedicated line. In addition, the "computer-readable recording medium" refers to a portable medium such as a flexible disk, a magneto-optical disk, a ROM, or a CD-ROM, and a storage device such as a hard disk built in a computer system. As described above, the recording medium on which the program is stored may be a non-transitory recording medium such as a CD-ROM.

In addition, the recording medium also includes an internal or external recording medium that is accessible by a distribution server to distribute the program. In addition, a configuration may be adopted in which the program is divided into a plurality of programs and the plurality of programs are downloaded at different times and then combined in each configuration provided by the carbon dioxide recovery system, or the distribution server that distributes each of the divided programs may be different.

Furthermore, the "computer-readable recording medium" also includes a medium that holds the program for a certain period of time, such as a volatile memory (RAM) inside the computer system that serves as a server or a client in a case where the program is transmitted via a network. In addition, the program may be a program for implementing some of the functions described above. Furthermore, the program may be a so-called difference file (difference program) capable of implementing the functions described above in combination with a program that has already been recorded on the computer system.

### List of Reference Signs

- 1:: Carbon dioxide recovery device
- 2:: Railway vehicle
- 11:: Adsorbent
- 12:: Adsorption container (container)
- 12d:: First opening portion (opening)
- 13:: Guide plate
- 14:: Replacement unit
- 15:: Control unit
- 16:: Separation unit
- 17:: Transport unit
- 18:: Recovery unit
- 19:: Heat storage unit
- 26:: Heat-generating component
- 27:: Cooling blower
- 29:: Exhaust duct

## Claims

1. A carbon dioxide recovery device, comprising:
- a container disposed outside a railway vehicle and having air permeability; and
- an adsorbent accommodated in the container and configured to adsorb carbon dioxide,
wherein the container has an opening facing a direction intersecting a traveling direction of the railway vehicle.

2. The carbon dioxide recovery device according to Claim 1,
wherein a guide plate that guides air from the opening to the adsorbent is provided inside the container.

3. The carbon dioxide recovery device according to Claim 1 or 2,
further comprising:
a replacement unit configured to replace the adsorbent accommodated in the container; and
a control unit configured to cause the replacement unit to replace the adsorbent when the railway vehicle is stopped.

4. The carbon dioxide recovery device according to Claim 3,
wherein the control unit causes the replacement unit to replace the adsorbent in a case where a stopping time of the railway vehicle exceeds a threshold value.

5. The carbon dioxide recovery device according to Claim 3 or 4, further comprising:
a transport unit configured to transport the adsorbent replaced by the replacement unit.

6. The carbon dioxide recovery device according to claim 5,
further comprising:
a sensor configured to detect a stop position of the railway vehicle when the railway vehicle is stopped,
wherein the control unit causes the transport unit to transport the replacement unit based on a detection result of the sensor.

7. The carbon dioxide recovery device according to any one of Claims 1 to 6, wherein the container is disposed at a position where an air flow of a cooling blower for cooling a heat-generating component of the railway vehicle is received.

8. The carbon dioxide recovery device according to any one of Claims 1 to 7, further comprising:
a separation unit that separates carbon dioxide from the adsorbent which has adsorbed the carbon dioxide,
wherein the separation unit is disposed at a position where an air flow of a cooling blower for cooling a heat-generating component of the railway vehicle is received.

9. The carbon dioxide recovery device according to Claim 1 or 2,
further comprising:
a heat storage unit configured to store heat generated by a heat-generating component of the railway vehicle; and
a control unit configured to cause the heat storage unit to release the heat stored in the heat storage unit toward the container when the railway vehicle is stopped.

10. The carbon dioxide recovery device according to Claim 9,
further comprising:
a recovery unit configured to recover carbon dioxide,
wherein the control unit connects the recovery unit to the container when the railway vehicle is stopped.

11. The carbon dioxide recovery device according to any one of Claims 1 to 10, wherein the container is disposed on a downstream side of an exhaust duct that discharges air inside the railway vehicle to outside.
